# FASCICULE DE BREVET EUROPEEN

(11) **EP 4 058 865 B1**
(45) Date de publication et mention de la délivrance du brevet: **15.01.2025**
(21) Numéro de dépôt: 20803855.4
(22) Date de dépôt: 13.11.2020
(51) Int. Cl.: G05D 1/00, B64U 50/10

(54) **PROCEDE DE GESTION DE LA MONTEE CONTINUE D'UN AERONEF OU D'UN DRONE**
VERFAHREN ZUM VERWALTEN DES KONTINUIERLICHEN STEIGENS EINES FLUGZEUGS ODER EINER DROHNE
METHOD FOR MANAGING THE CONTINUOUS CLIMB OF AN AIRCRAFT OR DRONE

(30) Priorité: 14.11.2019 FR 1912690
(43) Date de publication de la demande: 21.09.2022
(73) Titulaire: THALES, 92400 Courbevoie (FR)
(72) Inventeur: BOYER, Johan, 31036 TOULOUSE (FR); DURAND, Geoffrey, 31036 TOULOUSE (FR); SACLE, Jérôme, 31036 TOULOUSE (FR)
(74) Mandataire: Atout PI Laplace
(86) Numéro de dépôt international: PCT/EP2020/082080
(87) Numéro de publication internationale: WO 2021/094551

(56) Documents cités:
- US-A1- 2008 027 629
- US-A1- 2012 078 450
- US-A1- 2015 378 358
- US-A1- 2018 067 500
- WALTER R ED - SPITZER C R: "The Avionics Handbook, Chapter 15 : Flight Management Systems", 1 January 2001, THE AVIONICS HANDBOOK; [THE ELECTRICAL ENGINEERING HANDBOOK SERIES], CRC PRESS, BOCA RATON, FLA, PAGE(S) 1 - 25, ISBN: 978-0-8493-8348-9, XP002648022

## Description

### Domaine de l'invention

Le document décrit des procédés et des systèmes dans le domaine technique des systèmes de gestion du vol (FMS), et plus généralement des systèmes de navigation avionique ou non avionique embarqués sur aéronef de type Tablette ou EFB ou déportés au sol. Plus particulièrement, l'invention adresse des procédés et des systèmes pour le calcul de trajectoires.

### Etat de la Technique

Une trajectoire d'aéronef (ou « profil ») comporte une succession de segments contraints de montées et/ou de descentes et/ou de paliers afin de respecter les contraintes d'altitude et de vitesse spécifiées dans les procédures de départ.

Selon l'état de l'art, les hypothèses généralement utilisées pour construire un profil de montée sont une intégration en mode « partage d'énergie » (ou « *energy sharing »* en anglais), c'est-à-dire que le surplus d'énergie fournie par les moteurs (en plus de celle nécessaire au maintien de l'aéronef à son altitude et vitesse courante) est utilisée pour atteindre les « consigne-cible », une partie étant pour accélérer jusqu'à une vitesse cible (contrainte de vitesse ou vitesse optimisée) et l'autre partie pour monter jusqu'à une altitude cible (contrainte d'altitude ou niveau de croisière). Dans ce mode, pendant un segment de montée, la répartition d'énergie est fixe et la poussée fournie par les moteurs est la poussée de montée maximale. Le taux de montée, assimilé à la pente du segment de montée dans la suite de la description, est la résultante du calcul ainsi fait et non un paramètre d'entrée.

S'il est élevé, cela peut entraîner une mise en palier pour respecter une prochaine contrainte d'altitude.

La demande de brevet US 2018/067500 A1 présente une solution pour ajuster un taux de montée d'un aéronef uniquement en phase de croisière et applique une technique bien connue de paliers montants ou « cruise climb ».

Le vol d'un palier est d'une part non compatible du concept CCO (*« Continuous Climb Operation »* en anglais), visant à optimiser les phases de montée, d'autre part cette succession de palier/montée est non souhaitable d'un point de vue confort passager et/ou maintenance moteur (à cause des fortes variations de poussée en début et fin de palier).

S'il est faible, cela peut soit entrainer le non-respect des contraintes d'altitude, avec un potentiel impact sur la sécurité, soit induire le rallongement de la trajectoire latérale pour être à l'altitude voulue à un point donné (ex : vol de segment de vol ou leg HA), avec un impact sur la consommation de fuel.

Actuellement, le profil de montée est donc calculé en prenant en compte des vitesses cibles et des altitudes cibles. De manière générale, les solutions actuelles ne sont pas satisfaisantes ou présentent des limitations.

Il existe un besoin pour des procédés et des systèmes avancés pour le calcul de profils, en particulier de montée.

### Résumé de l'invention

Le document concerne des procédés et des dispositifs pour l'optimisation de la montée d'un aéronef ou d'un drone. Après avoir déterminé une stratégie de montée continue optimale, il est déterminé une trajectoire latérale, notamment en matière de vitesses et de rayons de virage, en fonction de prédictions calculées à l'étape précédente. Par la suite, des résultats de calculs sont affichés dans une ou plusieurs interfaces homme-machine et la stratégie de montée est effectivement volée. Des développements décrivent l'utilisation de pseudo-contraintes d'altitude, de vitesse et/ou d'évitements de palier, l'ajustement itératif de paramètres afin de faire coïncider le profil de la trajectoire courante avec le profil contraint en temps réel selon la dynamique de vol sélectionnée (e.g. en partage d'énergie, contrainte sur la pente de montée, contrainte sur la vitesse verticale de montée). Des aspects de système (e.g. FMS) et de logiciel sont décrits.

L'invention consiste notamment à déterminer un profil de montée « lissé » satisfaisant l'ensemble des contraintes de la procédure en minimisant ou en supprimant les paliers d'altitude et en minimisant les variations de pente, et à proposer une interface dédiée précisant les paramètres d'ajustement au cours de la montée.

Lors de la construction du profil de montée, il est nécessaire de respecter les contraintes d'altitude et de vitesse associées à la procédure de départ tout en évitant les paliers à altitude constante, conservateurs et non optimums.

L'invention permet de calculer une trajectoire avec un profil de montée optimisé en affinant le calcul pour atteindre de manière optimale les points contraints, ni trop tôt ni trop tard. Elle lisse le profil en évitant de le réduire à quelques valeurs de vitesse et une unique valeur de poussée. La solution peut être un simple ajustement de paramètres (ou une nouvelle stratégie de construction de profil géométrique) pour converger vers l'altitude ciblée à la localisation ciblée le long du plan de vol.

Par rapport aux systèmes existants, la solution apporte confort, meilleure conformité avec les contraintes aux points de vol, pour une consommation de carburant équivalente ou même légèrement inférieure.

### Description des figures

D'autres caractéristiques et avantages de l'invention apparaîtront à l'aide de la description qui suit et des figures des dessins annexés dans lesquels:
La [FIG. 1] montre un logigramme qui illustre les étapes générales du procédé de l'invention ;
La [FIG. 2] montre un exemple d'étapes correspondant à l'étape du calcul de la stratégie de montée optimale de la figure 1 ;
La [FIG. 3] illustre une situation où le paramètre adapté est la vitesse cible;
La [FIG. 4] illustre un exemple où un palier d'altitude n'est pas corrigé;
La [FIG. 5] illustre la gestion du surplus d'énergie disponible;
La [FIG. 6] illustre l'absence de relation immédiate entre le « sens » de modification du ratio et l'impact sur la pente moyenne au cours de l'intégration;
La [FIG. 7] montre un logigramme qui illustre une variante de l'étape du calcul de la stratégie de montée optimale de la figure 1 ;
La [FIG. 8] illustre un exemple de détermination d'une contrainte contraignante d'altitude;
La [FIG. 9] illustre un exemple d'affichage selon un mode de réalisation de l'invention.

### Description détaillée de l'invention

Les modes de réalisation de l'invention peuvent être adaptés à différents moyens de transport, comprenant notamment un drone, ou un avion commercial, ou un avion de fret, ou bien encore un hélicoptère, embarquant ou non des passagers. Plus généralement, l'invention concerne tout type de véhicule, voiture, camion, bus, train, moto, bateau, robot, sous-marin, etc. ou tout élément étant susceptible d'être télé-piloté (par liaison radio, satellite, ou autre), au moins partiellement (de manière intermittente, ou périodique, ou même opportuniste au cours du temps).

L'invention consiste à déterminer une trajectoire volable satisfaisant l'ensemble des contraintes de la procédure de départ sur des portions contraintes ou segments contraints.

Il est décrit un procédé pour l'optimisation de la montée d'un aéronef ou d'un drone, comprenant les étapes consistant à : - déterminer une stratégie de montée continue optimale ; - déterminer une trajectoire latérale, notamment les rayons de virage et/ou les angles de roulis, en fonction de prédictions de vitesse et d'altitude calculées à l'étape précédente. Le choix du profil de vitesse fait partie de la stratégie, tout comme le choix de la poussée et le choix de l'angle de roulis ainsi que le choix des contraintes d'altitude (incluant des tolérances ou marges de respect).

Il est à noter qu'en raison des adhérences entre calcul verticaux et latéraux, les prédictions sont calculées une première fois à partir d'une pseudo-trajectoire basée sur des distances directes entre points, et recalculées ensuite, une fois la trajectoire latérale établie avec les transitions. Ce mécanisme est représenté sur le logigramme global du procédé par le rebouclage entre les deux étapes.

Dans un développement, la trajectoire de montée continue optimale est déterminée selon des paramètres de profil de vol prédéfinis, lesdits paramètres comprenant des contraintes d'altitude et/ou de vitesse, et/ou des consignes de vitesse et/ou de poussée et/ou d'évitements de palier et/ou de minimisation de variation de pente.

Dans un développement, la stratégie prédéfinie comprend un ou plusieurs des paramètres sélectionnés parmi :
- une consigne sur le ratio de partage d'énergie ;
- une consigne sur la pente de montée ;
- une consigne sur la vitesse verticale de montée ;
- une consigne sur la vitesse longitudinale pendant la montée ; et/ou
- une consigne sur la poussée de montée ; et/ou
- une consigne sur l'angle de roulis.

Dans un développement, le procédé comprend une étape d'ajustement itératif de paramètres afin de faire coïncider le profil de la trajectoire courante avec le profil contraint en temps réel selon la dynamique de vol ou stratégie sélectionnée.

Dans un développement, la dynamique de vol comprend des manipulations effectuées sur la poussée moteur et la vitesse.

Dans un développement, la dynamique de vol comprend des manipulations effectuées sur le ratio de partage d'énergie.

Dans un développement, la dynamique de vol comprend une consigne sur la pente de montée.

Dans un développement, la dynamique de vol comprend une consigne sur la vitesse verticale de montée.

Dans un développement, la dynamique de vol comprend une consigne sur l'angle de roulis.

Dans un développement, un ou plusieurs des résultats de calcul intermédiaires, des informations relatives aux causes racines et/ou du contexte de calcul des étapes du procédé font l'objet d'un affichage dans une interface homme-machine.

Les étapes d'affichage peuvent être adaptées à l'utilisateur. Le procédé selon l'invention peut comprendre une ou plusieurs boucles de rétroaction (e.g. aval rétroagissant sur l'amont, feedforward, etc). Une boucle de rétroaction peut être « fermée » c'est-à-dire inaccessible au contrôle par l'humain (elle est exécutée par la machine). Elle peut être « ouverte » (e.g. étape d'affichage dans une interface homme-machine, validation ou tout autre système de confirmation par l'humain). Différents modes de réalisation peuvent aboutir à des implémentations différentes en fermant, respectivement en ouvrant, une ou plusieurs boucles ouvertes, respectivement fermées. Par exemple, le procédé selon l'invention peut invoquer uniquement des boucles de rétroaction ouvertes (i.e. le pilote intervient à tous les stades), ou bien uniquement des boucles de rétroaction fermée (e.g. automatisation totale), ou bien une combinaison des deux (la mise à contribution de l'humain étant variable ou configurable). De la sorte, le procédé (qui peut être d' « intelligence artificielle ») peut être interprété comme « transparent », au sens de contrôlable. L'affichage peut concerner des résultats de calcul intermédiaires, des informations relatives aux causes racines, et/ou au contexte de calcul. De la sorte le procédé peut être considéré comme « explicable ».

Dans un développement, le procédé comprend en outre l'étape consistant à appliquer la stratégie de montée continue optimale, par exemple en envoyant tout ou partie des informations calculées pour leur exploitation effective par des systèmes avioniques afin de mettre en application la stratégie de montée optimale obtenue.

Par exemple, le calculateur peut communiquer les valeurs cibles (comme par exemple la vitesse / la poussée) au système d'asservissement pour prise en compte automatique des nouvelles consignes. Transmission de l'ensemble ou d'une partie des paramètres ajustés de façon à ce qu'ils soient pris en compte par d'autres systèmes par exemple d'asservissement avion tel qu'un pilote automatique.

Il est décrit un système comprenant un ou plusieurs calculateurs de navigation avionique, de type système de gestion de vol FMS, ou non avionique, de type tablette embarquée ou calculateur de navigation déporté au sol pour mettre en oeuvre une ou plusieurs des étapes du procédé.

Il est décrit un produit programme d'ordinateur, ledit programme d'ordinateur comprend des instructions de code permettant d'effectuer une ou plusieurs des étapes du procédé, lorsque ledit programme est exécuté sur un ordinateur.

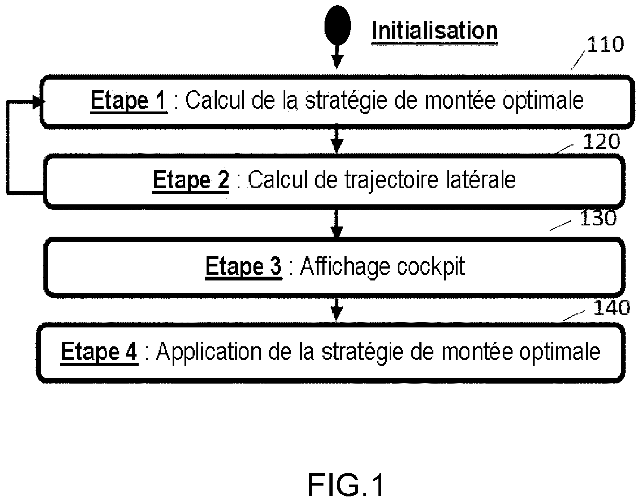

La [FIG. 1] montre un logigramme qui illustre des étapes du procédé de l'invention.

Après le calcul de la stratégie de montée optimale (110), il est déterminé une trajectoire latérale (120), puis un affichage cockpit (130) et enfin une application de la stratégie de montée optimale (140).

En particulier, l'étape 120 peut comprendre une étape consistant à calculer la trajectoire latérale sur la base de prédictions calculées à l'étape 110, en particulier, sur la base de vitesses prédites, nécessaires pour connaitre les rayons de virage à prévoir. Lors de cette étape, un ajustement de la consigne « angle de roulis utilisé pour calculer les rayons de virage » peut être mis en oeuvre de manière à obtenir une longueur de trajectoire adaptée à la tenue des contraintes contraignantes du plan de vol. Cette étape peut permettre selon le besoin de raccourcir ou de rallonger la trajectoire, respectivement dans les cas où le but est d'éviter un palier ou de tenir une contrainte contraignante que la stratégie de montée optimale n'a pas permis de respecter.

L'étape 130 d'affichage système peut consister à afficher tout ou partie des informations calculées pour permettre au pilote de comprendre les hypothèses faites par le système.

L'étape 140 consiste à mettre en application la stratégie de montée optimale calculée. Cette étape peut notamment consister à envoyer tout ou partie des informations calculées pour exploitation par des systèmes extérieurs afin de mettre en application la stratégie de montée optimale obtenue. On peut par exemple imaginer l'envoi des valeurs cibles (comme par exemple la vitesse / la poussée) au système d'asservissement pour prise en compte automatique des nouvelles consignes.

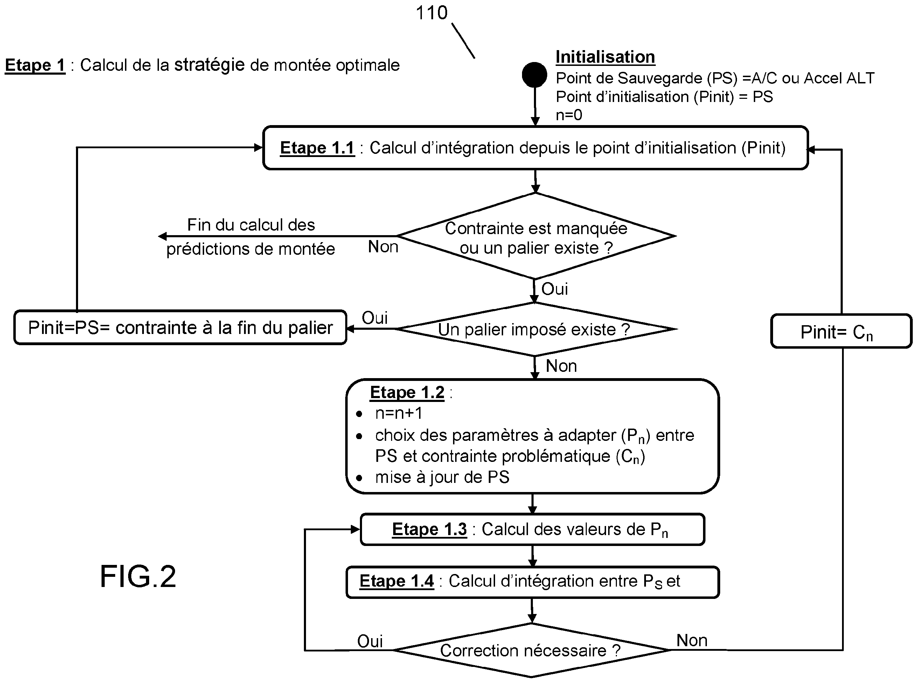

La [FIG. 2] montre un exemple d'étapes correspondant au calcul de la stratégie de montée optimale de l'étape 110 de la figure 1. La figure 2 montre différents paramètres qui sont :
- Cₙ qui désigne la n ième contrainte rencontrée au cours de l'intégration qui pose problème vis à vis des critères de succès posés, parmi lesquels :
   - aucune contrainte n'est manquée ;
   - aucun palier d'altitude ou changement de consigne de pente n'est indispensable pour satisfaire la contrainte d'altitude.
   - aucun changement de consigne de vitesse n'est indispensable pour satisfaire la contrainte de vitesse
- Pₙ qui désigne le paramètre adapté pour rendre Cₙ compatible des critères de succès posés.
- PS qui désigne le point de sauvegarde de l'intégration. A ce point, le contexte (état avion prédit) est mémorisé ce qui évite de refaire le calcul depuis le tout premier point d'initialisation ce qui serait pénalisant d'un point de vue performance.

Le procédé peut être initialisé au sein du calcul déjà existant des prédictions verticales de montée fait par un système de type système de gestion de vol, « *Flight Management System* » (acronyme FMS), ou tout autre système équivalent. Ce profil est calculé depuis l'avion (ou à défaut la piste si l'avion est au sol) jusqu'au niveau de croisière, atteint à un point appelé « Top of Climb » (ToC).

L'étape 110 consiste à calculer la stratégie de montée optimale, et permet de délivrer des prédictions verticales. Pour cela, au sein du calcul du profil de montée prenant en compte les paramètres courants (de type masse, vent, température...), il est déterminé, depuis un point d'intégration donné (étape 1.1), la prochaine contrainte d'altitude qui est manquée ou qui induit un palier ou changement de pente ou la prochaine contrainte de vitesse qui induit un changement de consigne de vitesse. Si une contrainte de ce type est trouvée, i.e. il s'agit d'une contrainte contraignante, certains paramètres de vol sont adaptés (étapes 1.2 à 1.4) afin d'assurer le respect de ces contraintes selon les performances de l'avion et les conditions météorologiques connues du système.

Les paramètres de vol adaptés doivent permettre de voler le profil de montée :
- en respectant les contraintes d'altitude ;
- en évitant l'usage de palier aux contraintes d'altitude sauf s'ils permettent de tenir des contraintes de vitesse ou sont imposés par deux contraintes d'altitudes de même valeur ;
- en respectant les contraintes de vitesses.

II est à noter que dans certaines configurations, le respect simultané des contraintes de vitesse et d'altitude n'est pas possible selon les performances de l'avion. Dans ce cas, la priorité est donnée au respect de la contrainte d'altitude pour des raisons de sécurité, tout en garantissant le respect de l'enveloppe de vol de l'avion.

Revenant à la figure 1, une étape suivante 120 est le calcul de la trajectoire latérale supportée par le précédent calcul de prédictions verticales nécessaires pour connaitre les vitesses et rayons de virage à prévoir.

II est à noter qu'en raison des adhérences entre calcul verticaux et latéraux, les prédictions sont calculées une première fois à partir d'une pseudo-trajectoire basée sur des distances directes entre points, et recalculées ensuite, une fois la trajectoire latérale établie avec les transitions. Ce mécanisme est représenté sur le logigramme global du procédé par le rebouclage entre les étapes 110 et 120.

L'étape d'itération entre les étapes 110 et 120 va consister en un procédé incrémental de résolution d'une contrainte contraignante (Cn) pour un segment contraint à partir d'un point de sauvegarde issu du segment contraint précédent (Cn-1). Le point de sauvegarde peut être ré-estimé afin de résoudre la contrainte contraignante (Cn). L'ajustement segment par segment peut amener à reconsidérer les i segments précédents impactés par la résolution de la contrainte n, les paramètres de consigne sélectionnés étant applicables à l'ensemble des segments contraints de montée entre Cn-i et Cn.

Une étape ultérieure est l'affichage 130 dans le cockpit de l'ensemble ou d'une partie des données calculées de façon à faciliter la compréhension à bord.

Une étape ultérieure comprend la mise en application 140 de la stratégie de montée optimale à travers la transmission de l'ensemble ou d'une partie des paramètres ajustés de façon à ce qu'ils soient pris en compte par d'autres systèmes, par exemple d'asservissement avion tel qu'un pilote automatique par exemple.

Revenant à la figure 2, l'étape 110 du calcul de la stratégie de montée optimale est détaillée.

Le but est le calcul de la stratégie de montée optimale sous forme de prédictions verticales de montée qui seront la concaténation de prédictions unitaires (au sens d'une même hypothèse d'intégration entre 2 points de sauvegarde donnés). Le contexte (état avion prédit) au point de sauvegarde est mémorisé.

### Etape 1.1: Calcul d'intégration sur le segment

Le procédé effectue le calcul des prédictions verticales de montée, depuis un point d'initialisation Pinit préalablement établi. Un calcul d'intégration est réalisé depuis ce point jusqu'au niveau de croisière avec les hypothèses de montée habituelles c'est-à-dire en mode « partage d'énergie » entre énergie potentielle et énergie cinétique avec les paramètres suivants :
- La vitesse cible qui est la vitesse optimisée d'un point de vue performance limitée aux différentes contraintes de vitesse avec une borne haute (de type AT OR BELOW ou AT ou WINDOW),
- La poussée moteur qui est la poussée nominale de montée (par défaut poussée maximale de montée).
- Le ratio de partage d'énergie qui est le ratio cible par défaut, donné par exemple par une table de performance.

Pour la gestion des contraintes d'altitude, trois cas de figures sont possibles (le raisonnement est analogue pour les contraintes de vitesse):
(1) Aucune contrainte d'altitude n'a été manquée et aucun palier d'altitude n'existe avant l'atteinte du niveau de croisière, le procédé stoppe le calcul des prédictions de montée et passe à l'étape 120.
(2) Un palier d'altitude existe mais il est dû à 2 contraintes d'altitude à la même valeur (par exemple 2 contraintes « AT » a la même altitude), le procédé repasse à l'étape 1.1 en considérant la contrainte de fin du palier comme le nouveau point de sauvegarde du procédé et comme nouveau point d'initialisation de l'intégration (Pinit = PS = Contrainte à la fin du palier).
(3) Dans les autres cas, le procédé passe à l'étape 1.2.

Le point d'initialisation Pinit et le point de sauvegarde PS sont initialisés au début du calcul des prédictions de phase dite « *climb* » (en anglais), généralement équivalent à l'atteinte de l'altitude caractéristique dite « accélération altitude » ou de l'avion si celui-ci est au-dessus de cette altitude.

Etape 1.2 : Sélection des paramètres à adapter.

Cette étape consiste à choisir les paramètres de l'intégration à corriger afin de chercher à satisfaire les différentes contraintes de vitesse et d'altitude tout en évitant des paliers d'altitude. Les paramètres à adapter dépendent de la stratégie choisie. Une première possibilité (d'autres seront exposées en variante plus bas) est de rester sur une intégration en mode « partage d'énergie » entre énergie potentielle et énergie cinétique avec le ratio de partage d'énergie par défaut. En revanche les paramètres vitesse ou poussée moteur sont adaptés dans la mesure du possible entre le point de sauvegarde PS et la contrainte problématique ou contrainte contraignante (Cₙ) (n étant incrémenté à chaque passage dans cette étape).

Deux cas de figures sont possibles (à traiter dans cet ordre de priorité):
(1) La contrainte contraignante d'altitude Cₙ avec une borne basse (de type AT OR ABOVE ou AT ou WINDOW) est manquée, ce qui signifie que le système global manque d'énergie pour augmenter son énergie potentielle. Dans ce cas, le paramètre adapté (Pₙ) est la vitesse cible. Dans le cas particulier où la poussée moteur utilisée en montée n'est pas la poussée maximale de montée mais une poussée réduite pour des problématiques de bruit par exemple, la poussée sera préalablement augmentée jusqu'à la poussée maximale avant d'adapter le paramètre vitesse.
(2) Un palier existe à l'altitude d'une contrainte contraignante d'altitude avec une borne haute (de type AT OR BELOW ou AT ou WINDOW) (non dû à 2 contraintes d'altitude à la même valeur): dans ce cas, le paramètre adapté (Pₙ) est la poussée cible.

Pₙ est donc le paramètre d'intégration à adapter depuis le dernier point de sauvegarde (PS) pour corriger le problème associé à la contrainte contraignante Cₙ.

Le point de sauvegarde PS est également mis à jour et positionné à Cₙ₋₁ lorsqu'il s'agit d'une contrainte de type « AT » ou que le paramètre de correction change à Cₙ₋₁ (ie Pₙ₋₁ et Pₙ sont différents). PS peut être mis à jour uniquement lorsqu'on est sûr que l'intégration jusqu'à ce point est la meilleure possible c'est à dire qu'aucun rebouclage en amont ne sera nécessaire pour corriger un futur problème.

### Etape 1.3 : Calcul des paramètres à adapter

Cette étape consiste à calculer et corriger le paramètre de l'intégration choisi à l'étape précédente.

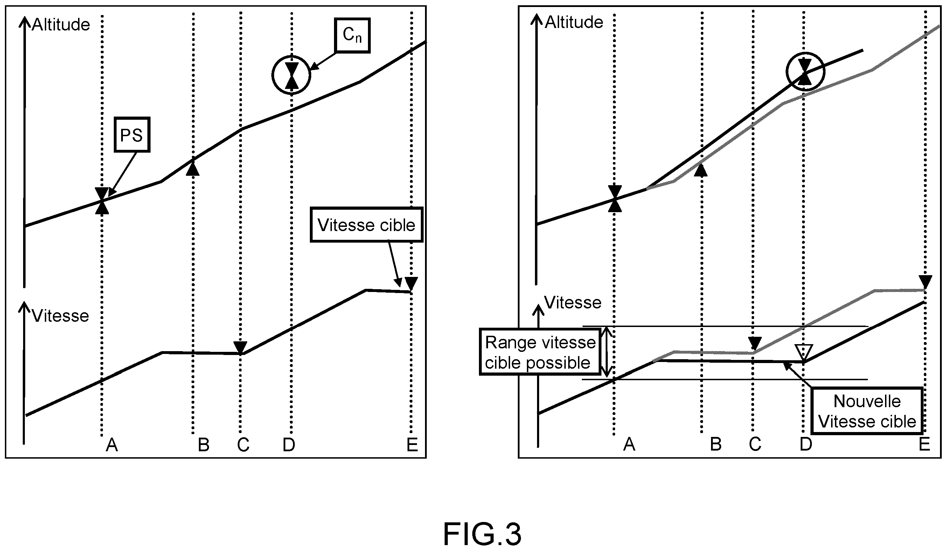

Lorsque le paramètre adapté Pn est la vitesse cible, trois cas de figures sont à envisager (à traiter dans cet ordre de priorité):
(1) Cas 1 : un palier existe à l'altitude d'une contrainte d'altitude comprise entre PS et Cₙ inclus (non dû à 2 contraintes d'altitude à la même valeur) (possiblement avec une tolérance, par exemple 1NM): ce cas arrive lorsque la vitesse cible avait été précédemment abaissée pour tenir la contrainte d'altitude Cₙ. Après intégration, un palier existe à une contrainte intermédiaire (nécessairement de type « AT or BELOW » ou « WINDOW ») ou à Cₙ. Dans ce cas, la vitesse cible est augmentée afin d'avoir un taux de montée plus faible. Elle doit être comprise entre la vitesse cible précédente et la borne haute du range précédent. L'objectif est ici de maximiser la vitesse, pour minimiser le temps de vol, tout en respectant l'ensemble des contraintes d'altitude et de vitesse pour éviter de faire des paliers en altitude. Le procédé passe ensuite à l'étape suivante d'intégration 1.4.
(2) Cas 2 : la contrainte d'altitude Cₙ est manquée (possiblement avec une tolérance, par exemple 100ft) : dans ce cas, la vitesse cible est abaissée afin d'avoir un meilleur taux de montée. Elle doit être comprise entre la vitesse atteinte à l'initialisation de l'intégration (ie atteinte au point de sauvegarde du procédé) (ou dans une variante la vitesse minimale de l'enveloppe de vol) lors de la première correction (sinon la borne basse du range précédent) et la vitesse atteinte à la contrainte manquée. Cette situation est illustrée à la [FIG. 3]. Dans le cas où la précédente vitesse cible était déjà la borne basse du range, le procédé passe directement à l'étape suivante 1.1 en considérant Cₙ comme le nouveau point d'initialisation de l'intégration (Pinit = Cn) sans correction supplémentaire. Dans les autres cas, le procédé passe ensuite à l'étape suivante d'intégration 1.4.
(3) Cas 3 : l'altitude à la contrainte Cₙ est strictement supérieure à la borne basse de la contrainte (possiblement avec une tolérance, par exemple 100ft). Ce cas arrive lorsque la vitesse cible avait été précédemment abaissée pour tenir la contrainte d'altitude. Après intégration, l'altitude à la contrainte est nettement supérieure (nécessairement de type AT or ABOVE ou WINDOW). Dans ce cas, même si la vitesse cible permet de respecter les différentes contraintes, elle est restrictive sans intérêt. Par conséquent, la vitesse cible est augmentée afin d'avoir un taux de montée plus faible. Elle doit être comprise entre la vitesse cible précédente et la borne haute du range précédent. Le procédé passe ensuite à l'étape suivante d'intégration 1.4.

Dans tous les cas précédents, la nouvelle vitesse cible pourra être retenue par différentes méthodes (dichotomie dans le range possible, force brute, méthode de la sécante, estimateur...). Cette vitesse cible sera considérée comme une « pseudo-contrainte » de vitesse de type « AT or BELOW » appliquée à Cₙ.

Dans les autres cas (ex : contrainte de vitesse manquée), le procédé passe à l'étape 1.1 de la [FIG. 2] en considérant Cₙ comme le nouveau point d'initialisation de l'intégration (Pinit = Cn).

Lorsque le paramètre adapté Pn est la poussée cible (initialement en raison d'un palier non souhaité à une contrainte d'altitude), quatre cas de figures sont à envisager (à traiter dans cet ordre de priorité):
(1) Cas 1 : une contrainte d'altitude est manquée entre PS et Cₙ inclus (possiblement avec une tolérance, par exemple 100ft) : Ce cas arrive lorsque la poussée cible avait été précédemment abaissée pour éviter un palier. Après intégration, une contrainte est manquée. Dans ce cas, la poussée cible est augmentée afin d'avoir un taux de montée plus fort. Elle doit être comprise entre la poussée de montée cible précédente et la borne haute du range précédent. Le procédé passe ensuite à l'étape suivante d'intégration 1.4.
(2) Cas 2 : une contrainte de vitesse est manquée (possiblement avec une tolérance, par exemple 5Kts) : Ce cas arrive lorsque la poussée cible avait été précédemment abaissée pour éviter un palier. Après intégration, une contrainte de vitesse est manquée. Alors la poussée cible est augmentée afin d'avoir une meilleure accélération. Elle doit être comprise entre la poussée cible précédente et la borne haute du range précédent. Dans ce cas, le respect des contraintes de vitesse est prioritaire sur l'évitement des paliers en altitude.

Dans le cas où la précédente poussée cible était déjà la poussée maximale de montée, le procédé passe directement à l'étape 1.1 de la [FIG. 2] en considérant Cₙ comme le nouveau point d'initialisation de l'intégration (Pinit = Cn) sinon le procédé passe ensuite à l'étape suivante d'intégration 1.4.
(3) Cas 3 : un palier d'altitude existe (non dû à 2 contraintes d'altitude à la même valeur) (possiblement avec une tolérance, par exemple 1NM) : dans ce cas, la poussée cible est abaissée afin d'avoir un taux de montée plus faible. Elle doit être comprise entre la poussée moteur minimale admissible (classiquement dite « IDLE ») lors de la première correction pour cette contrainte (sinon la borne basse du range précédent) et la poussée cible précédente.

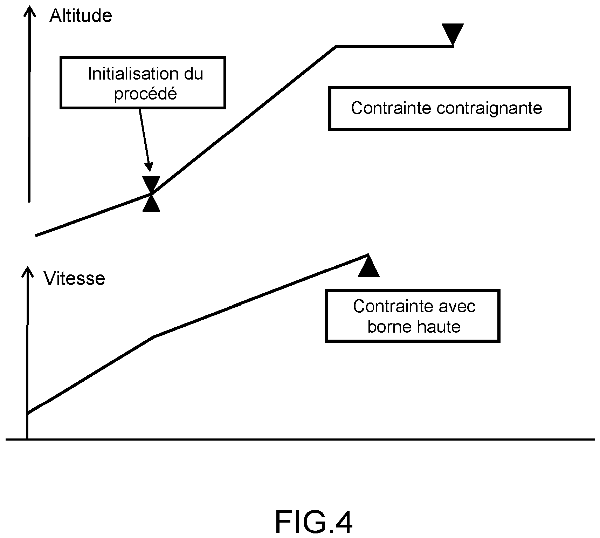

Dans le cas où la précédente poussée cible était déjà la borne basse du range ou qu'elle permettait de *juste* respecter la borne basse d'une contrainte de vitesse de type « AT OR ABOVE » ou « AT ou WINDOW » (ie que la vitesse de la borne basse n'est pas atteinte latéralement avant la contrainte), le procédé passe à l'étape 1.1 de la [FIG. 2] en considérant Cₙ comme le nouveau point d'initialisation de l'intégration (Pinit = Cn) sinon le procédé passe à l'étape suivante 1.4. La [FIG. 4] illustre un exemple où le palier d'altitude ne sera pas corrigé.
(4) Cas 4 : l'altitude à la contrainte Cₙ est strictement inferieure à la borne haute de la contrainte (possiblement avec une tolérance, par exemple 100ft): Ce cas arrive lorsque la poussée cible avait été précédemment abaissée pour éviter le palier à la contrainte d'altitude Cₙ. Après intégration, l'altitude à la contrainte est nettement inférieure (nécessairement de type AT or BELOW ou WINDOW). Dans ce cas, même si la poussée cible permet de respecter les différentes contraintes, elle est sousévaluée sans intérêt. Par conséquent, la poussée cible est augmentée afin d'avoir un taux de montée plus fort. Elle doit être comprise entre la poussée cible précédente et la borne haute du range précédent. Le procédé passe ensuite à l'étape d'intégration 1.4.

Dans tous les cas précédents, la nouvelle poussée cible pourra être retenue par différentes méthodes (dichotomie dans le range possible, force brute, estimation...).

Dans les autres cas, le procédé passe à l'étape 1.1 de la [FIG. 2] en considérant Cₙ comme le nouveau point d'initialisation de l'intégration (Pinit = Cn) sans correction supplémentaire.

### Etape 1.4 : Calcul d'intégration entre PS et Cₙ

Cette étape consiste à faire une intégration avec les paramètres ajustés définis dans l'étape précédente. Ce calcul est réalisé entre le point de sauvegarde du procédé (PS) et la prochaine contrainte initialement problématique (Cₙ).

Si aucun des cas de figures de correction évoqués dans l'étape précédente n'existe (trois cas pour la correction en vitesse et quatre cas pour la correction en poussée), le procédé passe ensuite à l'étape 1.1 en considérant Cₙ comme le nouveau point d'initialisation de l'intégration (Pinit = Cn). Et l'intégration précédente continue depuis Cₙ en se basant sur une stratégie nominale, c'est-à-dire avec des paramètres tels qu'utilisés classiquement dans l'état de l'art.

Dans les autres cas, le procédé repasse à l'étape précédente 1.3.

Plusieurs variantes de réalisation sont décrites ci-après.

### Première variante

Une première variante consiste à changer les paramètres à adapter dans l'étape 1.2 de la [FIG. 2] en restant sur une intégration en mode « partage d'énergie » entre énergie potentielle et énergie cinétique avec :
i. vitesse cible est la vitesse optimisée d'un point de vue performance limitée aux différentes contraintes de vitesse avec une borne haute (de type AT OR BELOW ou AT ou WINDOW)
ii. Poussée moteur est la poussée nominale de montée (par défaut poussée maximale de montée).
iii. En revanche le paramètre ratio de partage du surplus d'énergie est adapté dans la mesure du possible.

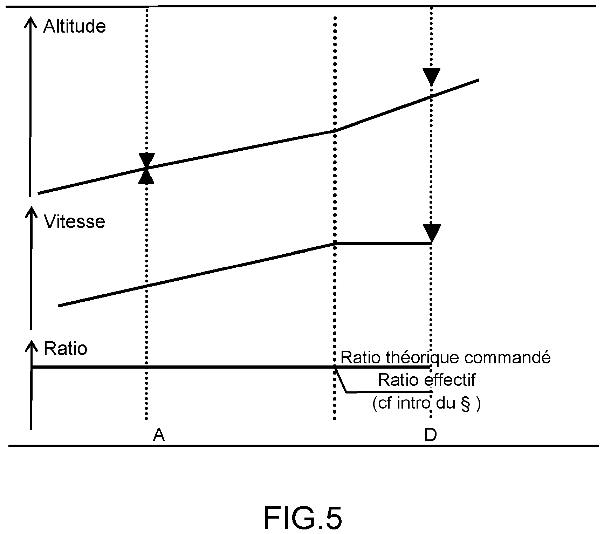

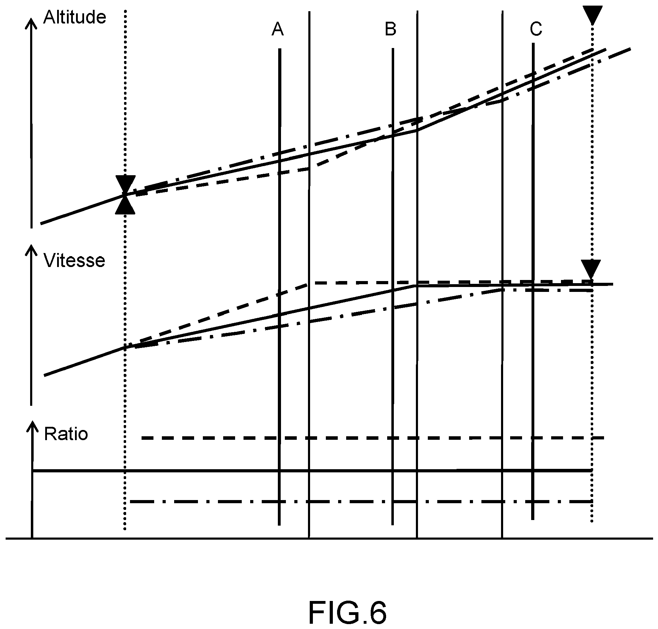

Dans ce cas, les étapes (A), (B), (C) suivantes sont à remplacer comme décrites ci-dessous.
(A) Choix des paramètres à adapter (étape 1.2) :
   - Le paramètre ratio de partage du surplus d'énergie est adapté dans la mesure du possible entre le point de sauvegarde et la contrainte problématique (Cₙ) (n étant incrémenté à chaque passage dans cette étape) dans les deux cas de figures suivants:
      (1) La contrainte d'altitude Cₙ avec une borne basse (de type AT OR ABOVE ou AT ou WINDOW) est manquée,
      (2) Un palier existe à l'altitude d'une contrainte d'altitude avec une borne haute (de type AT OR BELOW ou AT ou WINDOW) (non dû à 2 contraintes d'altitude à la même valeur).
   - Le point de sauvegarde PS est également mis à jour et positionné à Cₙ₋₁ lorsque Cₙ₋₁ et Cₙ ont été initialement problématiques pour des raisons différentes. Par exemple, si Cₙ₋₁ était manquée alors le point de sauvegarde PS est positionné à Cₙ₋₁ uniquement si un palier existe à Cₙ (et inversement) sinon PS reste inchangé.
(B) Calcul du paramètre à adapter (étape 1.3) :
   - Pour clarifier la suite, on considérera un ratio de partage du surplus d'énergie dans un range de 0 à 100. 0 (resp.100) indique que tout le surplus d'énergie est utilisé pour augmenter l'énergie potentielle (respectivement cinétique). La valeur 0 sera à remplacer par une valeur *Ratio_min* légèrement supérieure si la mise en palier pour tenir une contrainte de vitesse est à proscrire. Ce ratio n'a de sens et d'impact que lorsqu'aucune des valeurs cibles altitude et vitesse n'est atteinte car une fois une des cibles atteinte, tout le surplus d'énergie disponible sera naturellement affecté pour atteindre la dernière cible quelque-soit la valeur de ce ratio. Cette situation est illustrée en [FIG.5].
   - Cette caractéristique rend la modification du ratio d'autant plus efficace pour régler la problématique initiale de pente que l'avion a peu de phase à vitesse constante sur la portion intégrée. Le cas le plus défavorable est l'intégration sur une portion à vitesse constante puisque la modification du ratio n'y a aucun impact sur la pente. Par conséquent, la vitesse cible a une grande importance quant à l'impact du changement de ratio sur la pente.
   - De plus, hormis le cas avec aucune partie à vitesse constante, contrairement au procédé 1 (avec correction en poussée ou vitesse) il n'y a pas de relation immédiate entre le « sens » de modification du ratio et l'impact sur la pente moyenne au cours de l'intégration. Le cas de la [FIG. 6] en fournit une illustration. En A (pas de vitesse constante sur l'intégration), plus le ratio est faible plus la pente est forte, en revanche en B et C ce n'est plus le cas.

Le terme ratio désigne le ratio théorique. Cinq cas de figures sont à envisager (à traiter dans cet ordre de priorité) et le nouveau ratio pourra être retenu par différentes méthodes (force brute, estimateur...) :
(1) Cas 1 : une contrainte d'altitude est manquée (possiblement avec une tolérance, par exemple 100ft) : dans ce cas, le ratio est modifié afin d'avoir un taux de montée moyen plus élevé. Le but est de respecter au plus juste la contrainte.
(2) Cas 2 : Une contrainte de vitesse est manquée (possiblement avec une tolérance, par exemple 5Kts) : Dans ce cas, le ratio est augmenté afin d'avoir un taux d'accélération plus fort.
(3) Cas 3 : à l'étape 1.2, la contrainte Cₙ avait été retenue car elle était manquée et l'altitude à Cₙ est maintenant strictement supérieure à la borne basse de la contrainte (possiblement avec une tolérance, par exemple 100ft): Ce cas arrive lorsque le ratio cible avait été précédemment modifié pour tenir la contrainte d'altitude. Après intégration, l'altitude à la contrainte est nettement supérieure (nécessairement de type « AT or ABOVE » ou « WINDOW »). Dans ce cas, même si le ratio cible permet de respecter les différentes contraintes, il est sur-corrigé sans intérêt. Par conséquent, le ratio cible est de nouveau modifié afin d'avoir un taux de montée plus faible. Le but est de respecter au plus juste la contrainte.
(4) Cas 4 : à l'étape 1.2, la contrainte Cₙ avait été retenue car elle induisait un palier et l'altitude à la contrainte Cₙ est strictement inferieure à la borne haute de la contrainte (possiblement avec une tolérance, par exemple 100ft): Ce cas arrive lorsque le ratio cible avait été précédemment modifié pour éviter le palier à la contrainte d'altitude Cₙ. Après intégration, l'altitude à la contrainte est nettement inférieure (nécessairement de type AT or BELOW ou WINDOW Dans ce cas, même si le ratio cible permet de respecter les différentes contraintes, il est sur-corrigé sans intérêt. Par conséquent, le ratio cible est de nouveau modifié afin d'avoir un taux de montée plus élevé. Le but est de respecter au plus juste la contrainte.
(5) Cas 5 : un palier existe (non dû à 2 contraintes d'altitude à la même valeur) (possiblement avec une tolérance, par exemple 1NM): Dans ce cas, le ratio est modifié afin d'avoir un taux de montée moyen plus faible. Le but est de respecter au plus juste la contrainte.

Dans tous les cas précédents si l'algorithme de modification du ratio a « épuisé » tous les cas possibles (ex : en cas de force brute, toutes les valeurs dans le range ont été testées) le ratio retenu devra remplir les conditions suivantes par ordre de priorité:
- Aucune contrainte d'altitude n'est manquée entre PS et Cn (possiblement avec une tolérance, par exemple 100ft) (ou minimise l'erreur le cas échéant).
- Aucune contrainte de vitesse n'est manquée entre PS et en (possiblement avec une tolérance, par exemple 5Kts) (ou minimise l'erreur le cas échéant).
- Aucun palier d'altitude n'existe entre PS et Cn (ou minimise sa taille le cas échéant).
- L'altitude à la contrainte Cₙ est strictement égale à la borne haute (respectivement basse) de la contrainte si à l'étape 1.2, Cₙ avait été retenue car elle était manquée (respectivement elle induisait un palier) (ou minimise l'erreur le cas échéant).

(C) Calcul d'intégration entre PS et Cₙ (étape 1.4) _{:}
- Cette étape consiste à faire une intégration avec les paramètres ajustés définis dans l'étape précédente. Ce calcul est réalisé entre le point de sauvegarde du procédé (PS) et la prochaine contrainte initialement problématique (Cₙ).
- Si aucun des cas de figures de correction évoqués dans l'étape 1.3 n'existe ou que plus aucune correction de ratio n'est possible, le procédé passe ensuite à l'étape 1.1 en considérant Cₙ comme le nouveau point d'initialisation de l'intégration (Pinit = Cn). L'intégration précédente (étape 1.1) continue depuis Cₙ en se basant sur une stratégie nominale, c'est-à-dire avec des paramètres tels qu'utilisés classiquement dans l'état de l'art.

Dans les autres cas, le procédé repasse à l'étape 1.3.

### Seconde variante

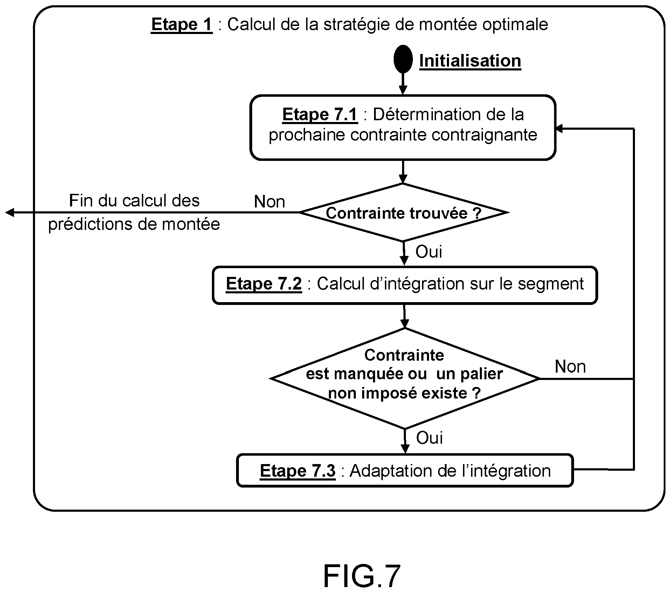

Une seconde variante consiste à changer les paramètres à adapter en utilisant un mode autre d'intégration imposant une pente et non plus un partage d'énergie. Dans ce cas, le logigramme de l'étape 110 (l'étape 1 de la figure 1) est modifié comme illustré à la [Fig. 7] :

### Etape 1.1 devient étape 7.1 : Calcul de la contrainte contraignante

La première étape du procédé consiste à rechercher la prochaine contrainte d'altitude contraignante sur la base d'un algorithme qui vise à minimiser le nombre de cassures de pente dans le calcul du profil.

La recherche est faite depuis le point d'intégration auquel a été initialisé le procédé, et permet de déterminer la prochaine contrainte de type « AT » ou « AT OR ABOVE » ou « AT OR BELOW » ou « WINDOW » par lequel passera le profil.

Le premier point d'initialisation est positionnée au début du calcul des prédictions de phase dite « *climb* », équivalent à l'atteinte de l'altitude caractéristique dite « accélération altitude » ou de l'avion si celui-ci est au-dessus de cette altitude.

Depuis le point d'initialisation du procédé :
- Un calcul géométrique se fait jusqu'à la prochaine contrainte AT si elle existe, et :
   - Si ce calcul permet de satisfaire toute les contraintes intermédiaires, la prochaine contrainte AT est alors la prochaine contrainte contraignante, et le procédé passe à l'étape suivante.
   - Sinon, le calcul est réinitialisé au point d'initialisation du procédé, et cible la contrainte intermédiaire qui a été manquée (de type AT OR BELOW, AT OR ABOVE ou WINDOW). Cette étape est répétée jusqu'à ce que la pente géométrique obtenue permette de satisfaire l'ensemble des contraintes entre la cible et le point d'initialisation du procédé. La contrainte cible est alors la prochaine contrainte contraignante, et le procédé passe à l'étape suivante.
- Sinon, un calcul d'intégration est réalisé depuis le point d'initialisation du procédé jusqu'au niveau de croisière avec les hypothèses de montée habituelles c'est-à-dire en mode « partage d'énergie » entre énergie potentielle et énergie cinétique avec les paramètres suivants :
   - La vitesse cible qui est la vitesse optimisée d'un point de vue performance limitée aux différentes contraintes de vitesse avec une borne haute (de type AT OR BELOW ou AT ou WINDOW),
   - La poussée moteur nominale de montée (par défaut la poussée maximale de montée).
   - Le ratio de partage d'énergie qui est le ratio cible par défaut, donné par exemple par une table de performance.

Si cet ensemble permet de satisfaire toutes les contraintes d'altitude sans réaliser de palier, il n'existe plus de contrainte contraignante en altitude, le procédé passe directement à l'étape 120 de calcul de la trajectoire latérale.

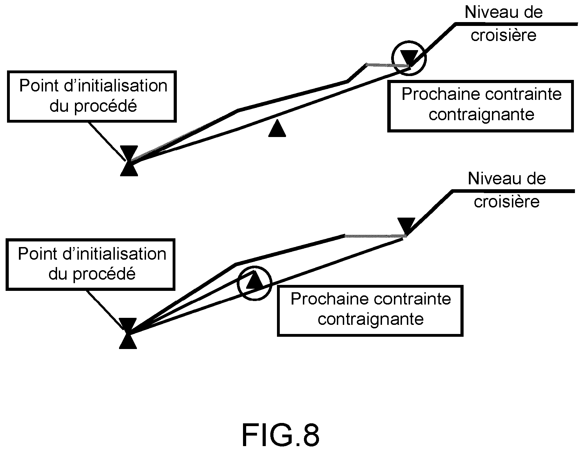

Sinon, le calcul est réinitialisé au point d'initialisation du procédé, et un calcul géométrique se fait jusqu'à la prochaine contrainte intermédiaire qui a été manquée ou qui a induit un palier (contrainte de type AT OR BELOW, AT OR ABOVE ou WINDOW). Cette étape est répétée jusqu'à ce que la pente géométrique obtenue permette de satisfaire l'ensemble des contraintes entre la cible et le point d'initialisation du procédé. La contrainte cible est alors la prochaine contrainte contraignante, et le procédé passe à l'étape suivante. Cette situation est illustrée à la [FIG. 8]

### Etape 1.2 devient étape 7.2 : Calcul d'intégration sur le segment

Cette étape consiste à faire une intégration de montée en mode « partage d'énergie » entre énergie potentielle et énergie cinétique avec les paramètres suivants :
- La vitesse cible qui est la vitesse optimisée d'un point de vue performance limitée aux différentes contraintes de vitesse avec une borne haute (de type AT OR BELOW ou AT ou WINDOW),
- La poussée moteur qui est la poussée nominale de montée (par défaut poussée maximale de montée).
- Le ratio de partage d'énergie qui est le ratio cible par défaut, donné par exemple par une table de performance.

Ce calcul est réalisé entre le point d'initialisation du procédé et la prochaine contrainte contraignante. Deux cas de figures sont possibles :
(1) Aucune contrainte d'altitude n'est manquée et aucun palier d'altitude n'existe (ou il est dû à 2 contraintes d'altitude à la même valeur), le procédé passe à l'étape 7.1 en considérant la prochaine contrainte contraignante comme le nouveau point d'initialisation du procédé.
(2) Le procédé repasse à l'étape 7.3 dans les autres cas.

### Etape 1.3 devient étape 7.3 : Adaptation de l'intégration

Le paramètre à adapter est le mode d'intégration. Dans cette variante, elle sera effectuée le long d'une pente géométrique donnée avec un paramètre vitesse cible qui est la vitesse optimisée d'un point de vue performance limitée aux différentes contraintes de vitesse avec une borne haute (de type « AT OR BELOW » ou « AT » ou « WINDOW »),

Dans ce mode d'intégration, la poussée moteur de montée est la résultante du calcul ainsi fait pour un profil de vitesse et une pente donnés.

La pente cible sera retenue en cohérence des deux cas de figures suivants:
(1) Cas 1 : la contrainte contraignante d'altitude est manquée (possiblement avec une tolérance, par exemple 100ft) : dans ce cas, la pente cible est directement celle reliant point d'initialisation du procédé à la borne basse de la prochaine contrainte contraignante (de type « AT » ou « AT or ABOVE » ou « WINDOW »). Cette pente devra être néanmoins limitée à une pente maximale dite *pente_max* (par exemple celle permettant la tenue de la vitesse au début d'intégration avec une poussée moteur de montée maximale (pour éviter une décélération en phase de montée) ou celle permettant la tenue de la vitesse *Vmin* (précédemment définie dans le document)).
(2) Cas 2 : Un palier existe à l'altitude de la contrainte contraignante (non dû à 2 contraintes d'altitude à la même valeur) (possiblement avec une tolérance, par exemple 1NM): Dans ce cas, la pente cible est directement celle reliant point d'initialisation du procédé à la borne haute de la prochaine contrainte contraignante (de type « AT » ou « AT or BELOW » ou « WINDOW »).

Enfin un calcul d'intégration de montée en mode suivi de pente est effectué entre le point d'initialisation et la contrainte contraignante avec les paramètres suivants :
- La vitesse cible qui est la vitesse optimisée d'un point de vue performance limitée aux différentes contraintes de vitesse avec une borne haute (de type « AT OR BELOW » ou « AT » ou « WINDOW »),
- La pente cible qui est celle précédemment calculée.

Puis le procédé passe à l'étape 7.1 en considérant la prochaine contrainte contraignante comme le nouveau point d'initialisation du procédé (puisque par construction, aucune contrainte ni aucun palier n'existe entre le point d'initialisation et la contrainte contraignante)

### Troisième variante

Une troisième variante proche de la seconde variante existe. Elle consiste uniquement à changer les paramètres à adapter dans l'étape 7.3 en utilisant un mode d'intégration imposant une vitesse verticale de montée (dite « VIS ») et non plus une pente.

L'étape 7.3 décrite dans la seconde variante est remplacée par celle décrite ci-dessous :

### Etape 7.3 - troisième variante : Adaptation de l'intégration

Le paramètre à adapter est le mode d'intégration. Dans cette variante, elle sera effectuée à une vitesse verticale de montée (dite « VIS ») imposée avec un paramètre vitesse cible qui est la vitesse optimisée d'un point de vue performance limitée aux différentes contraintes de vitesse avec une borne haute (de type « AT OR BELOW » ou « AT ou WINDOW »),

Dans ce mode d'intégration, la poussée moteur de montée est la résultante du calcul ainsi fait pour un profil de vitesse et une VIS donnés.

La VIS cible sera retenue en cohérence des deux cas de figures suivants (à traiter dans cet ordre de priorité):
(1) Cas 1 : la contrainte contraignante d'altitude est manquée (possiblement avec une tolérance, par exemple 100ft) : dans ce cas, la VIS cible est augmentée afin d'avoir un meilleur taux de montée. Elle doit être comprise entre une vitesse verticale minimale dite *VS min* (300ft/min par exemple pour qu'un contrôleur ayant demandé à un avion de monter le voit effectivement monter) et la vitesse verticale maximale dite *VS_max* (calculée selon les performances de l'avion, avec par exemple la vitesse au début d'intégration et une poussée moteur de montée maximale) lors de la première correction pour cette contrainte (sinon entre la VIS cible précédente et la borne haute du range précédent).
   - Dans le cas où la précédente VIS cible était déjà la borne haute du range, le procédé passe directement à l'étape 7.1 en considérant la prochaine contrainte contraignante comme le nouveau point d'initialisation du procédé sinon le procédé continue dans cette étape.
(2) Cas 2 : un palier existe à l'altitude de la contrainte contraignante (non dû à 2 contraintes d'altitude à la même valeur) (possiblement avec une tolérance, par exemple 1NM) : Dans ce cas, la VIS cible est diminuée afin d'avoir un taux de montée plus faible. Elle doit être comprise entre *VS_min* et *VS_max* lors de la première correction pour cette contrainte (sinon entre la borne basse du range précédent et la VIS cible précédente).
   - Dans le cas où la précédente VIS cible était déjà la borne basse du range, le procédé passe directement à l'étape 7.1 en considérant la prochaine contrainte contraignante comme le nouveau point d'initialisation du procédé sinon le procédé continue dans cette étape.

Dans tous les cas précédents, la nouvelle VIS pourra être retenue par différentes méthodes (dichotomie dans le range possible, force brute, ...).

Enfin, un calcul d'intégration de montée en mode suivi de VIS est effectué entre le point d'initialisation et la contrainte contraignante avec les paramètres suivants :
- La vitesse cible qui est la vitesse optimisée d'un point de vue performance limitée aux différentes contraintes de vitesse avec une borne haute (de type AT OR BELOW ou AT ou WINDOW),
- La VIS cible qui est celle précédemment calculée.

Deux cas de figures sont possibles :
(1) Aucune contrainte d'altitude et aucun palier d'altitude n'existe (ou il est dû à 2 contraintes d'altitude à la même valeur), le procédé passe à l'étape 7.1 en considérant la prochaine contrainte contraignante comme le nouveau point d'initialisation du procédé.
(2) Le procédé reboucle au début de l'étape courante.

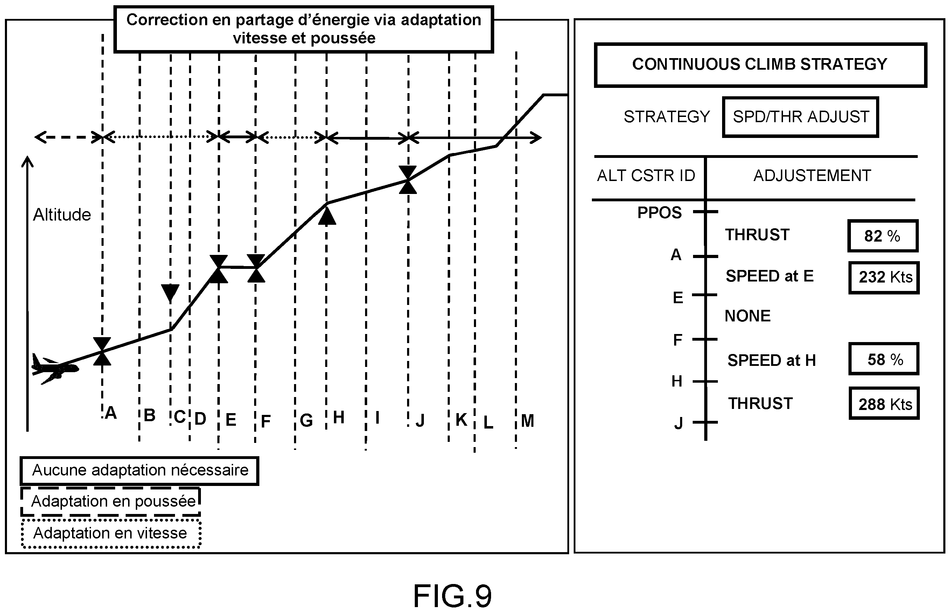

La [FIG. 9] illustre un exemple d'affichage selon un mode de réalisation de l'invention.

Une page dédiée du système peut par exemple résumer les hypothèses entre chaque contrainte contraignante avec possibilité pour l'équipage de surpasser ou d'ignorer la donnée calculée par le système. De plus cette interface pourrait offrir la possibilité à l'équipage de sélectionner la stratégie de correction souhaitée entre les différentes variantes. (SPEED/THRUST - ENERGY SHARE RATIO - VERTICAL SPEED ou FLIGHT PATH ANGLE)

Si une vitesse cible est utilisée à un point donné, elle pourrait être affiché classiquement comme une contrainte de vitesse « AT OR BELOW » positionnée dans le champ prévu à cet effet sur la page décrivant le plan de vol. Une symbologie particulière permettrait au pilote de la distinguer des contraintes de procédures, pour indiquer qu'il s'agit d'une « pseudo-contrainte » positionnée par le système.

On peut également imaginer affichée la valeur cible à l'équipage (comme par exemple la vitesse / la poussée) pour information uniquement en permettant au pilote de comprendre les hypothèses faites par le système et/ou pour un suivi manuel de cette nouvelle consigne. Si elle est modifiée en raison d'un ajustement du système, elle pourrait être affichée de manière particulière (symbole ou coloris) dans les champs prévus à cet effet.

La présente invention peut s'implémenter à partir d'éléments matériel et/ou logiciel. Elle peut être disponible en tant que produit programme d'ordinateur sur un support lisible par ordinateur. Le support peut être électronique, magnétique, optique, ou électromagnétique.

Suivant les modes de réalisation de l'invention, la localisation des calculs peut être variée : à ce jour, des ressources tant locales (embarquées) qu'accédées à distance (Cloud) peuvent être mobilisées. Il est aussi légitime de penser que des moyens de calculs très significatifs peuvent - ou pourront à terme - être embarqués (serveur rack, PC, tablettes, smartphones, casques VR, etc).

Matériellement, les modes de réalisation de l'invention peuvent être réalisés par ordinateur. L'ordinateur peut être un rack ou une tablette ou un EFB ou une partie logicielle intégrée dans le FMS, etc. l'architecture peut être distribuée, par exemple du type « informatique dans les nuages » (« cloud computing » en anglais). Des serveurs en pair-à-pair, entièrement ou partiellement distribués (existences de centres) peuvent interagir. Il peut exister un ou plusieurs noeuds privilégiés, quand il s'agit de cloud privé ou de chaîne de blocs privée. Les accès peuvent être multiplateformes (e.g. depuis EFB, WebApp, accès sol, etc). Un ou plusieurs EFB peuvent être en interaction avec un ou plusieurs FMS pour la gestion des calculs.

## Revendications

1. Procédé pour l'optimisation de la montée d'un aéronef ou d'un drone, le procédé étant mis en oeuvre par ordinateur dans un système de gestion de vol FMS et comprenant les étapes consistant à :
- déterminer une stratégie de montée continue optimale (110), la stratégie de montée continue optimale étant déterminée selon des paramètres de profil de vol, lesdits paramètres de profil de vol comprenant des contraintes d'altitude et/ou de vitesse, et/ou des consignes de vitesse et/ou de poussée et/ou d'évitement de palier et/ou de minimisation de variation de pente, et permettant de calculer des prédictions verticales de montée ;
- déterminer une trajectoire latérale (120), selon des paramètres de trajectoire latérale comprenant des consignes de rayon de virage en fonction de consignes d'angle de roulis, et selon les prédictions verticales calculées pour les paramètres de profil de vol ;
- itérer les deux étapes précédentes sur chaque segment contraint de la trajectoire de l'aéronef ou du drone, un segment contraint étant un segment contenant une contrainte contraignante ; puis itérer les deux étapes précédentes sur l'ensemble de la montée, en ajustant à chaque itération lesdits paramètres de profil de vol et lesdits paramètres de trajectoire latérale, jusqu'à ce que toutes les contraintes contraignantes soient satisfaites une à une selon une stratégie prédéfinie.

2. Procédé selon la revendication 1, dans lequel l'étape d'itération est faite selon une méthode d'ajustement itératif de paramètres, parmi :
- un ajustement de type dichotomique ;
- un ajustement de type attaque par force brute ;
- un ajustement par méthode dite de la sécante ;
- un ajustement par la méthode d'estimateur ;
le choix de la méthode pouvant être dicté par un critère de meilleure performance en temps de réponse.

3. Procédé selon la revendication 1 ou 2, dans lequel la stratégie prédéfinie est ajustable par un utilisateur et comprend un ou plusieurs paramètres sélectionnés parmi :
- une consigne sur le ratio de partage d'énergie entre énergie potentielle et énergie cinétique ;
- une consigne sur la pente de montée ;
- une consigne sur la vitesse verticale de montée ;
- une consigne sur la vitesse longitudinale pendant la montée ;
- une consigne sur la poussée de montée ; et/ou
- une consigne sur l'angle de roulis.

4. Procédé selon l'une quelconque des revendications précédentes dans lequel une ou des consigne(s) cible est(sont) transformée(s) en pseudo-contraintes prises en compte dans le calcul des prédictions verticales.

5. Procédé selon l'une quelconque des revendications précédentes dans lequel l'étape d'itération consiste en un procédé incrémental de résolution d'une contrainte contraignante (Cn) pour un segment contraint à partir d'un point de sauvegarde issu du segment contraint précédent (Cn-1), lequel point de sauvegarde peut être ré-estimé afin de résoudre la contrainte contraignante (Cn), l'ajustement segment par segment pouvant amener à reconsidérer les i segments précédents impactés par la résolution de la contrainte n, les paramètres de consigne sélectionnés étant applicables à l'ensemble des segments contraints de montée entre Cn-i et Cn.

6. Procédé selon l'une quelconque des revendications précédentes, dans lequel un ou plusieurs des résultats de calcul intermédiaires, des informations relatives aux causes racines et/ou du contexte de calcul des étapes du procédé fait l'objet d'un affichage (130) dans une interface homme-machine offrant des possibilités de modifications par un utilisateur.

7. Procédé selon l'une quelconque des revendications précédentes, comprenant en outre une étape consistant à appliquer la stratégie de montée continue optimale (140), en envoyant tout ou partie des informations calculées pour leur exploitation effective par des systèmes avioniques afin de mettre en application la stratégie de montée optimale obtenue.

8. Un système comprenant un ou plusieurs calculateurs de type système de gestion de vol FMS pour mettre en oeuvre les étapes du procédé selon l'une quelconque des revendications 1 à 7.

9. Un produit programme d'ordinateur, ledit programme d'ordinateur comprenant des instructions de code permettant d'effectuer les étapes du procédé selon l'une quelconque des revendications 1 à 7, lorsque ledit programme est exécuté sur un ordinateur.

## Patentansprüche

1. Verfahren zur Optimierung des Steigflugs eines Luftfahrzeugs oder einer Drohne, wobei das Verfahren computergestützt in einem Flugmanagementsystem FMS implementiert wird und die folgenden Schritte umfasst:
- Bestimmen (110) einer optimalen kontinuierlichen Steigflugstrategie, wobei die optimale kontinuierliche Steigflugstrategie gemäß Flugprofilparametern bestimmt wird, wobei die Flugprofilparameter Höhen- und/oder Geschwindigkeitsbeschränkungen und/oder Sollwerte für Geschwindigkeit und/oder Schub und/oder Vermeidung von Horizontalflug und/oder Minimierung von Gradientenvariationen umfassen und das Berechnen von vertikalen Steigflugvorhersagen ermöglichen;
- Bestimmen (120) einer seitlichen Flugbahn, gemäß Parametern einer seitlichen Flugbahn, die Sollwerte für den Kurvenradius in Abhängigkeit von Sollwerten für den Rollwinkel umfassen, und gemäß den für die Flugprofilparameter berechneten vertikalen Vorhersagen;
- Iterieren der beiden vorhergehenden Schritte an jedem eingeschränkten Segment der Flugbahn des Flugzeugs oder der Drohne, wobei ein eingeschränktes Segment ein Segment ist, das eine bindende Einschränkung enthält; dann Iterieren der beiden vorhergehenden Schritte über den gesamten Steigflug, wobei bei jeder Iteration die Flugprofilparameter und die Parameter der seitlichen Flugbahn angepasst werden, bis alle bindenden Einschränkungen eine nach der anderen gemäß einer vordefinierten Strategie erfüllt sind.

2. Verfahren nach Anspruch 1, wobei der Iterationsschritt gemäß einer Methode zur iterativen Anpassung von Parametern durchgeführt wird, aus:
- einer Anpassung vom dichotomen Typ;
- einer Anpassung vom Typ Brute-Force-Angriff;
- einer Anpassung nach dem sogenannten Sekantenverfahren;
- einer Anpassung nach dem Schätzerverfahren;
wobei die Wahl des Verfahrens durch ein Bestleistungskriterium in Bezug auf die Ansprechzeit vorgegeben sein kann.

3. Verfahren nach Anspruch 1 oder 2, wobei die vordefinierte Strategie durch einen Benutzer anpassbar ist und einen oder mehrere Parameter umfasst, die ausgewählt sind aus:
- einem Sollwert für das Verhältnis der Energieverteilung zwischen potenzieller Energie und kinetischer Energie;
- einem Sollwert für den Steigfluggradienten;
- einem Sollwert für die vertikale Steiggeschwindigkeit;
- einem Sollwert für die Längsgeschwindigkeit während des Steigflugs;
- einem Sollwert für den Steigschub; und/oder
- einem Sollwert für den Rollwinkel.

4. Verfahren nach einem der vorhergehenden Ansprüche, wobei ein oder mehrere Zielsollwert(e) in Pseudo-Einschränkungen umgewandelt wird/werden, die bei der Berechnung der vertikalen Vorhersagen berücksichtigt werden.

5. Verfahren nach einem der vorhergehenden Ansprüche, wobei der Iterationsschritt aus einem inkrementellen Verfahren zum Lösen einer bindenden Einschränkung (Cn) für ein eingeschränktes Segment, ausgehend von einem Sicherungspunkt aus dem vorhergehenden eingeschränkten Segment (Cn-1) besteht, wobei der Sicherungspunkt neu geschätzt werden kann, um die bindende Einschränkung (Cn) zu lösen, wobei die segmentweise Anpassung dazu führen kann, dass die i vorhergehenden Segmente, die durch die Lösung der einschränkenden Einschränkung n beeinflusst werden, neu betrachtet werden, wobei die ausgewählten Sollwertparameter auf sämtliche eingeschränkten Steigflugsegmente zwischen Cn-i und Cn anwendbar sind.

6. Verfahren nach einem der vorhergehenden Ansprüche, wobei eines oder mehrere von den Zwischenberechnungsergebnissen, den Informationen über die Grundursachen und/oder dem Berechnungskontext der Verfahrensschritte den Gegenstand einer Anzeige (130) in einer Mensch-Maschine-Schnittstelle bildet/bilden, die Möglichkeiten für Änderungen durch einen Benutzer bietet.

7. Verfahren nach einem der vorhergehenden Ansprüche, ferner umfassend einen Schritt des Anwendens (140) der optimalen kontinuierlichen Steigflugstrategie, indem alle oder ein Teil der berechneten Informationen zu ihrer tatsächlichen Nutzung durch Avioniksysteme gesendet werden, um die erzielte optimale Steigflugstrategie zu implementieren.

8. System, umfassend einen oder mehrere Rechner vom Typ Flugmanagementsystem FMS, um die Schritte des Verfahrens nach einem der Ansprüche 1 bis 7 zu implementieren.

9. Computerprogrammprodukt, wobei das Computerprogramm Code-Anweisungen umfasst, die es ermöglichen, die Schritte des Verfahrens nach einem der Ansprüche 1 bis 7 durchzuführen, wenn das Programm auf einem Computer ausgeführt wird.

## Claims

1. A method for optimising the climb of an aircraft or drone, the method being computer-implemented in a flight management system FMS and comprising the steps of:
- determining (110) an optimal continuous climb strategy, the optimal continuous climb strategy being determined depending on flight-profile parameters, said flight-profile parameters comprising altitude and/or speed constraints, and/or setpoints in respect of speed and/or thrust and/or level-flight avoidance and/or gradient-variation minimisation, and allowing vertical climb predictions to be computed;
- determining (120) a lateral path, depending on lateral-path parameters comprising setpoints in respect of turn radius as a function of roll-angle setpoints, and depending on the vertical predictions computed for the flight-profile parameters;
- iterating the previous two steps on each constrained segment of the aircraft or drone path, a constrained segment being a segment containing a binding constraint; then iterating the two previous steps over the entire climb, while fitting, during each iteration, said flight-profile parameters and said lateral-path parameters, until all the binding constraints have been met one by one according to a predefined strategy.

2. The method according to claim 1, wherein the iterating step is carried out using an iterative fitting method for fitting parameters, chosen from:
- a dichotomous fitting type;
- a brute-force attack fitting type;
- a fitting based on the so-called secant-method;
- a fitting based on the estimator method;
the choice of the method possibly being dictated by a criterion of better performance in respect of response time.

3. The method according to claim 1 or 2, wherein the predefined strategy is adjustable by a user and comprises one or more parameters selected from:
- a setpoint in respect of the energy-sharing ratio between potential energy and kinetic energy;
- a setpoint in respect of the climb gradient;
- a setpoint in respect of the vertical climb rate;
- a setpoint in respect of the longitudinal speed during the climb;
- a setpoint in respect of the climb thrust; and/or
- a setpoint in respect of the roll angle.

4. The method according to any one of the preceding claims, wherein one or more target setpoint(s) is (are) converted into pseudo-constraints taken into account in the computation of the vertical predictions.

5. The method according to any one of the preceding claims, wherein the iterating step consists of an incremental method for solving a binding constraint (Cn) for a constrained segment from a save point issued from the previous constrained segment (Cn-1), which save point may be re-estimated in order to solve the binding constraint (Cn), the segment-by-segment fit possibly leading to reconsideration of the i previous segments impacted by the solving of constraint n, the setpoint parameters selected being applicable to all of the constrained climb segments between Cn-i and Cn.

6. The method according to any one of the preceding claims, wherein one or more of the intermediate computation results, the information relating to the root causes and/or the computation context of the steps of the method are displayed (130) on a human-machine interface offering options for modifications by a user.

7. The method according to any one of the preceding claims, further comprising a step of applying (140) the optimal continuous climb strategy, by transmitting all or some of the computed information to be actually exploited by avionic systems in order to apply the obtained optimal climb strategy.

8. A system comprising one or more flight management system FMS computers for implementing the steps of the method according to any one of claims 1 to 7.

9. A computer program product, said computer program comprising code instructions that allow the steps of the method according to any one of claims 1 to 7 to be performed, when said program is executed on a computer.
